# EUROPEAN PATENT APPLICATION

(11) **EP 4 666 824 A1**
(43) Date of publication of application: **24.12.2025**
(21) Application number: 25172026.4
(22) Date of filing: 23.04.2025
(51) Int. Cl.: A01B 69/04, A01D 34/82, A01K 11/00, H04N 23/23, G05D 1/622

(54) **GUIDANCE SYSTEM, AGRICULTURAL VEHICLE AND RELATED METHOD**

(30) Priority: 17.06.2024 GB 202408708
(71) Applicant: AGCO International GmbH, 8212 Neuhausen am Rheinfall (CH)
(72) Inventor: STEEN, Kim Arild, Randers (DK); CHRISTIANSEN, Martin Peter, 8930 Randers (DK)
(74) Representative: AGCO Intellectual Property Department

(57) **Abstract**

A guidance system (118) for controlling operation of an agricultural vehicle (102) includes at least one processor and at least one non-transitory computer-readable storage medium storing instructions thereon that, when executed by the at least one processor, cause the guidance system (118), during an agricultural process, to receive image data from an image sensor (104), analyze the received image data to identify heat signatures represented in the received image data, analyze the identified heat signatures to determine a presence and a type of an object, determine a location of the object, and based at least partially on the determined location of the object, adjust operation of the agricultural vehicle (102).

## Description

### CROSS-REFERENCE TO RELATED APPLICATIONS

N/A

### BACKGROUND

In the temperate zones, the spring season brings not only the renewal of vegetation but also the birthing period for many ground-nesting animals such as deer, rabbits, hedgehogs, and boars. During this period, grasslands and fields need to be mowed for agricultural purposes, and the period coincides with the time when young animals, particularly fawns, are most vulnerable. Mowing operations inadvertently pose a significant threat to these juvenile animals, often leading to fatal encounters. The foregoing not only results in the loss of wildlife but also raises concerns regarding the contamination of feed with animal remnants, an issue of both ethical and quality control significance.

Deer fawns, which are often found hidden in tall grass to evade predators, are particularly at risk during these operations. Research indicates that deer frequently have twin births, with about 75% of fawns being part of a twin pair. This biological trait increases the above mentioned risks as finding one fawn often implies the proximity of a sibling. Studies have documented that twin fawns are found within an average distance of 35 meters from each other under observed conditions. This distance can extend up to approximately 85 meters when considering all found births.

Additionally, fields and grasslands are often populated with various static obstacles including sprinkler systems, water outlets, well covers, telecom boxes, large stones, tree stumps, and harmful weeds. These objects can damage agricultural equipment, hinder efficient mowing, and pose safety risks to operators.

The foregoing findings underscore the need for a systematic approach to safeguard these vulnerable animals during agricultural processes.

### BRIEF SUMMARY

Embodiments include a guidance system for controlling operation of an agricultural vehicle. The guidance system may include at least one processor and at least one non-transitory computer-readable storage medium storing instructions thereon that, when executed by the at least one processor, cause the guidance system, during an agricultural process, to: receive image data from an image sensor, analyze the received image data to identify heat signatures represented in the received image data, analyze the identified heat signatures to determine a presence and a type of an object, determine a location of the object, and based at least partially on the determined location of the object, adjust operation of the agricultural vehicle.

The image sensor may include a thermal camera.

Analyzing the identified heat signatures may include utilizing one or more machine learning models to determine a presence and a type of an object.

The guidance system may further include instructions that, when executed by the at least one processor, cause the guidance system to generate a geofence around the object.

The geofence may be generated based at least partially on received Global Navigation Satellite System (GNSS) data, a determined orientation of the agricultural vehicle, and a known field of view of the camera relative to the agricultural vehicle.

The object may include a living organism.

Analyzing the received image data to identify heat signatures represented in the received image data may include distinguishing living organisms from other warm objects based on at least one of a size, a shape, or a heat pattern of the heat signatures.

Distinguishing living organisms from other warm objects based on at least one of a size, a shape, or a heat pattern of the heat signatures may include utilizing a trained neural network to distinguish the heat signatures.

Determining the location of the object may include: receiving position data from a real-time kinematic GNSS receiver of the guidance system during the agricultural process, based at least partially on the received position data, determining a location of the agricultural vehicle at a time when the object was detected, and based at least partially on the determined location of the agricultural vehicle, determining the location of the object.

Determining the location of the object further may include receiving navigation data from an inertial measurement unit (IMU) of the agricultural vehicle and determining the location of the object based at least partially on the received navigation data.

Adjusting operation of the agricultural vehicle may include modifying a path of travel of the agricultural vehicle to avoid the object.

Modifying a path of travel of the agricultural vehicle may include causing the agricultural vehicle to stop moving prior to intersecting the coordinates of the object and reverse for at least some distance.

Modifying a path of travel of the agricultural vehicle may include generating a new intended path of travel for the agricultural vehicle that navigates around the object.

Modifying a path of travel of the agricultural vehicle may include causing the agricultural vehicle to stop moving prior to intersecting the location of the object and requesting user input prior to resuming movement of the agricultural vehicle.

Modifying a path of travel of the agricultural vehicle may include generating a new intended wayline for at least a region of a field that avoids intersection with the location of the object.

Adjusting operation of the agricultural vehicle may include changing an orientation of an implement coupled to the agricultural vehicle.

Changing an orientation of an implement coupled to the agricultural vehicle may include changing orientation of at least one mowing unit coupled to the agricultural vehicle.

Embodiments may include a method of guiding operation of an agricultural vehicle during an agricultural process. The method may include: receiving, at a guidance system, image data from an image sensor coupled to the agricultural vehicle, analyzing the received image data to identify heat signatures represented in the received image data, analyzing the identified heat signatures to determine a presence and a type of an object, receiving position data from a GNSS receiver of the guidance system, based at least partially the received position data, a known field of view of the image sensor, and a known orientation of the agricultural vehicle, determining a location of the object, and based at least partially on the determined location of the object, adjusting operation of the agricultural vehicle.

Receiving image data from the image sensor may include receiving thermal image data from a thermal camera.

One or more embodiments include an agricultural vehicle including a guidance system for controlling operation of the agricultural vehicle. The guidance system may include: at least one processor and at least one non-transitory computer-readable storage medium storing instructions thereon that, when executed by the at least one processor, cause the guidance system, during an agricultural process, to: receive thermal image data from a thermal camera, analyze the received thermal image data to identify heat signatures represented in the thermal image data, analyze the identified heat signatures to determine a presence and a type of a living organism, generate a geofence around the living organism, and based at least partially on the generated geofence, adjust operation of the agricultural vehicle.

A guidance system for controlling operation of an agricultural vehicle. The guidance system may include: at least one processor and at least one non-transitory computer-readable storage medium storing instructions thereon that, when executed by the at least one processor, cause the guidance system, during an agricultural process, to: receive thermal image data from a thermal camera, receive additional image data from at least one additional image sensor, generate a three-dimensional environmental model utilizing at least the received additional image data, based at least partially on the received thermal image data, identify heat signatures represented in thermal image data, analyze the identified heat signatures to determine a presence and a type of an object, mark an area around the object within a digital map and adjust operation of the agricultural vehicle when the agricultural vehicle is proximate to the area around the object.

The at least one additional image sensor may include at least one of an additional thermal camera, a light detection and ranging (LiDAR) camera, a short wave infrared (SWIR) camera, a near infrared camera (NIR), an RGB camera, or a polarized camera.

The at least one additional image sensor may include an additional thermal camera and at least one of a light detection (LiDAR) and ranging sensor, a short wave infrared (SWIR) camera, a near infrared camera (NIR), an RGB camera, or a polarized camera.

Analyzing the identified heat signatures may include utilizing one or more machine learning models to determine a presence and a type of an object.

Marking the area around the object within the digital map may include generating a geofence around the object.

The guidance system may further include instructions that, when executed by the at least one processor, cause the guidance system to receive position data from a GNSS receiver.

The guidance system may further include instructions that, when executed by the at least one processor, cause the guidance system to receive navigational data from a receiving navigation data from an inertial measurement unit (IMU) of the agricultural vehicle.

The guidance system may further include instructions that, when executed by the at least one processor, cause the guidance system to determine a fields of view of the thermal camera and the at least one additional image sensor.

The geofence may be generated based at least partially on the received position data, the received navigational data, and the determined fields of view of the thermal camera and the at least one additional image sensor.

The object may include a living organism.

Analyzing the identified heat signatures to determine a presence and a type of an object may include distinguishing living organisms from other warm objects based on at least one of a size, a shape, or a heat pattern of the heat signatures.

Distinguishing living organisms from other warm objects based on at least one of a size, a shape, or a heat pattern of the heat signatures may include utilizing a trained neural network to distinguish the heat signatures.

Adjusting operation of the agricultural vehicle may include modifying a path of travel of the agricultural vehicle to avoid the object.

Modifying a path of travel of the agricultural vehicle may include causing the agricultural vehicle to stop moving prior to intersecting the area around the object and reverse for at least some distance.

Modifying a path of travel of the agricultural vehicle generated a new intended path of travel for the agricultural vehicle that navigates around the object.

Adjusting operation of the agricultural vehicle may include changing an orientation of an implement coupled to the agricultural vehicle.

Changing an orientation of an implement coupled to the agricultural vehicle may include changing orientation of at least one mowing unit coupled to the agricultural vehicle.

One or more embodiments include a method of guiding operation of an agricultural vehicle during an agricultural process. The method may include: receiving, at a guidance system, thermal image data from at least one thermal camera coupled to the agricultural vehicle, receiving additional image data from at least one additional image sensor; generating a three-dimensional environmental model utilizing the received thermal image data and the additional image data, based at least partially on the received thermal image data, identifying heat signatures represented in the three-dimensional environmental model, analyzing the identified heat signatures to determine a presence and a type of an object, receiving position data from a GNSS receiver, based at least partially the received position data and the three-dimensional environmental model, marking an area around the object within a digital map, and adjusting operation of the agricultural vehicle when the agricultural vehicle is proximate the area around the object.

The at least one additional image sensor may include a light detection and ranging (LiDAR) camera.

Some embodiments include an agricultural vehicle. The agricultural vehicle may include a guidance system for controlling operation of the agricultural vehicle. The guidance system may include at least one processor and at least one non-transitory computer-readable storage medium storing instructions thereon that, when executed by the at least one processor, cause the guidance system, during an agricultural process, to: receive thermal image data from a thermal camera, receive additional image data from at least one additional image sensor, generating a three-dimensional environmental model utilizing the received thermal image data and the additional image data, based at least partially on the received thermal image data, identify heat signatures represented in the thermal image data, analyze the identified heat signatures to determine a presence and a type of a living organism, generate a geofence around the living organism, and based at least partially on the generated geofence, adjust operation of the agricultural vehicle.

One or more embodiments include guidance system for controlling operation of an agricultural vehicle. The guidance system may include at least one processor and at least one non-transitory computer-readable storage medium storing instructions thereon that, when executed by the at least one processor, cause the guidance system, during an agricultural process, to: receive image data from an image sensor, analyze the received image data to identify heat signatures represented in the received image data, analyze the identified heat signatures to determine a presence and a type of an object, generate an alert indicating the presence of the object; and outputting the alert.

The image sensor may include a thermal camera.

Analyzing the identified heat signatures may include utilizing one or more machine learning models to determine a presence and a type of an object.

Outputting the alert may include outputting an audible alert.

Outputting the alert may include displaying an indication of the presence of the object on a display.

The indication may include information regarding the type of the object and a location of the object relative to the agricultural vehicle.

The object may include a living organism.

Analyzing the received image data to identify heat signatures represented in the received image data may include distinguishing living organisms from other warm objects based on at least one of a size, a shape, or a heat pattern of the heat signatures.

Distinguishing living organisms from other warm objects based on at least one of a size, a shape, or a heat pattern of the heat signatures may include utilizing a trained neural network to distinguish the heat signatures.

The guidance system may further include instructions that, when executed by the at least one processor, cause the guidance system to output a recommendation to adjust operation of the agricultural vehicle responsive to the presence of the object.

The recommendation may include a recommendation to modify a path of travel of the agricultural vehicle to avoid the object.

The recommendation may include a recommendation to stop movement of the agricultural vehicle and reverse the agricultural vehicle for at least some distance.

The recommendation may include a recommendation to change an orientation of an implement coupled to the agricultural vehicle.

Changing an orientation of an implement coupled to the agricultural vehicle may include changing orientation of at least one mowing unit coupled to the agricultural vehicle.

Some embodiments include a method of guiding operation of an agricultural vehicle during an agricultural process. The method may include receiving, at a guidance system, thermal image data from at least one thermal camera coupled to the agricultural vehicle, receiving additional image data from at least one additional image sensor, generating a three-dimensional environmental model utilizing the received thermal image data and the additional image data, based at least partially on the received thermal image data, identifying heat signatures represented in the thermal image data, analyzing the identified heat signatures to determine a presence of an object, a type of the object, and a location of the object relative to the agricultural vehicle, and generating and outputting an alert indicating the presence of the object and the location of the object relative to the agricultural vehicle.

Outputting the alert may include outputting a visual representation of the object on a display.

The visual representation may include a depiction of the three-dimensional environmental model with the location of the object marked on the three-dimensional environmental model.

The visual representation may include the received thermal image data.

One or more embodiments include an agricultural vehicle including a guidance system for controlling operation of the agricultural vehicle. The guidance system may include at least one processor and at least one non-transitory computer-readable storage medium storing instructions thereon that, when executed by the at least one processor, cause the guidance system, during an agricultural process, to: receive thermal image data from at least one thermal camera coupled to the agricultural vehicle, based at least partially on the received thermal image data, identifying heat signatures represented in the thermal image data, analyze the identified heat signatures to determine a presence and a type of an object, based at least partially on the received image data, determine a location of the object relative to the agricultural vehicle; and generate and output an alert indicating the presence of the object and the location of the object relative to the agricultural vehicle.

Generating and outputting the alert may include outputting at least one of an audible alert or a visual alert on a display.

Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1 shows a schematic representation of an agricultural vehicle and implement having a guidance system mounted thereto according to one or more embodiments;
FIG. 2A and FIG. 2B show various schematic representations of an agricultural vehicle and implement having a guidance system and image sensor mounted thereto according to one or more embodiments;
FIG. 3A and FIG. 3B show various schematic representations of an agricultural vehicle and implement having a guidance system and image sensor mounted thereto according to one or more embodiments;
FIG. 4 shows a schematic view of a guidance system according to one or more embodiments;
FIG. 5 shows a flowchart of a method of operation an agricultural vehicle;
FIG. 6 shows an agricultural vehicle and an implement at various stages along an initial path of travel, a diverted path of travel, and a subsequent path of travel according to one or more embodiments;
FIG. 7 shows an agricultural vehicle and an implement at various stages along a first pass within a field and a second pass within the field according to one or more embodiments;
FIG. 8 shows an agricultural vehicle and an implement at various stages along an initial path of travel and a subsequent path of travel according to one or more embodiments;
FIG. 9 shows an agricultural vehicle and an implement at various stages along an initial path of travel according to one or more embodiments;
FIG. 10 shows an agricultural vehicle and an implement at various stages along an initial path of travel and a subsequent path of travel according to one or more embodiments;
FIG. 11A and FIG. 11B show various schematic representations of an implement having a first image sensor and a second image sensor mounted thereto according to one or more embodiments;
FIG. 12A and FIG. 12B show various schematic representations of an implement having a first image sensor, a second image sensor, and third image sensor mounted thereto according to one or more embodiments;
FIG. 13 shows a schematic view of a guidance system according to one or more embodiments;
FIG. 14 shows a schematic view of a guidance system according to one or more embodiments;
FIG. 15 shows a flowchart of a method of operating an agricultural vehicle;
FIG. 16 shows example thermals images captured by thermal image cameras having different fields of view;
FIG. 17 shows a flowchart of a method of operating an agricultural vehicle;
FIG. 18 is a schematic view of a central controller according to embodiments of the disclosure.

### DETAILED DESCRIPTION

Illustrations presented herein are not meant to be actual views of any particular agricultural vehicle, implement, image sensor, guidance system, component, or system, but are merely idealized representations that are employed to describe embodiments of the disclosure. Additionally, elements common between figures may retain the same numerical designation for convenience and clarity.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements of a hanger assembly, a monitoring device, and/or a rail assembly as illustrated in the drawings. Additionally, these terms may refer to an orientation of elements of a hanger assembly, a monitoring device, and/or a rail assembly when utilized in a conventional manners.

As used herein, the term "proximate," when utilized to describe positions of agricultural vehicle and/or the implement to a detected object means that the agricultural vehicle and/or the implement and a detected object are within a given distance from each other. The distance may be at least partially dependent on a size (e.g., a lateral width in a horizontal direction orthongal to a path of travel) of the agricultural vehicle and/or the implement. For example, the agricultural vehicle may be proximate the detected object when the agricultural vehicle within 20m, 10m, 5m, 2m, or 1m of the detected object. In some embodiments, the distance may be a percentage (e.g., 25%) of the overall lateral width of the agricultural vehicle and/or implement.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

Some embodiments described herein include integrating Long Wave Infrared (LWIR) sensors with precise localization tools such as, for example, like RTK-GNSS, to detect objects (e.g., fawns and other living organisms) within a field of operation of an agricultural vehicle (e.g., in areas around the agricultural vehicle and/or an implement, virtually marking a location of the detected objects, and adjusting operation of the agricultural vehicle to avoid coming into contact with the object. In some embodiments, the precision of the determined location of the detected object is enhanced with data from an inertial measurement unit. The systems and methods described herein aim not only to detect the thermal signatures of hidden living organism but also to identify static obstacles within an intended path of the agricultural vehicle and/or implement. By mapping the locations of both living and inanimate obstructions accurately, the systems and methods described herein assist preventing wildlife casualties and equipment damage, thereby ensuring the safety and efficiency of agricultural operations.

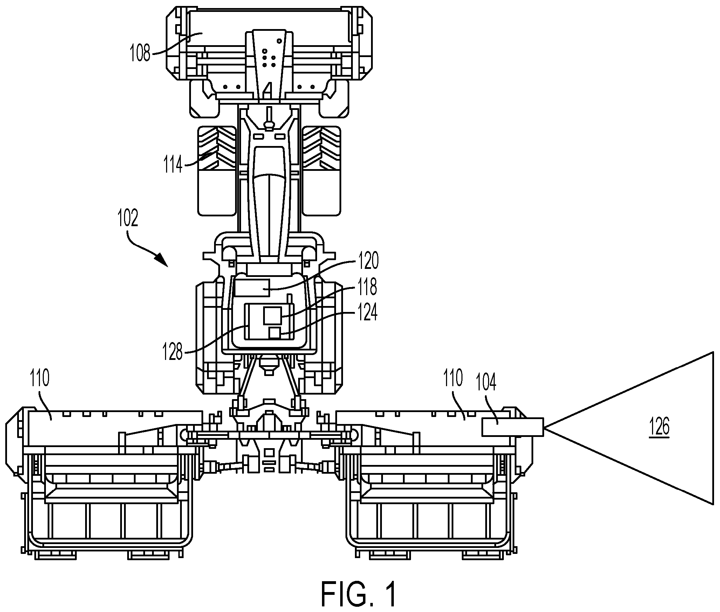

FIG. 1 is a simplified top view of an agricultural vehicle 102 (e.g., a tractor) and an implement 122 including a front mower 108 coupled to a front of the agricultural vehicle 102, and two side mowers 110 coupled to the agricultural vehicle 102 in locations behind and at least partially offset from a longitudinal axis of the agricultural vehicle 102 in direction orthogonal to the longitudinal axis. For instance, the two side mowers 110 may be coupled to a hitch of the agricultural vehicle 102 via one or more mounting structures. The agricultural vehicle 102 may be supported by wheels 114 and/or tracks. Furthermore, while the implement 122 is depicted and described as including mowers, the disclosure is not so limited, and the embodiments described herein are equally applicable to other implements such as, for example, seeders, sprayers, planters, cultivator, etc.

The agricultural vehicle 102 may further include a control system 128 in, for example, a cab of the agricultural vehicle 102. The control system 128 may include a guidance system 118 (e.g., a guidance system application) and at least one input/output device 120 (e.g., a display). The control system 128 may be configured to control one or more operations and devices of the agricultural vehicle 102 and/or the implement 122. In some embodiments, the implement 122 may further include one or more image sensors 104 mounted to the agricultural vehicle 102 and/or the implement 122. The image sensors 104 may be operably coupled to the guidance system 118 of the control system 128 and may be at least partially operated by the guidance system 118. As is described in further detail below, the image sensors 104 may be capture image data (e.g., image/video data) of an environment around the agricultural vehicle 102 while the agricultural vehicle 102 and/or the implement 122 are performing an agricultural process (e.g., mowing operations). Furthermore, the guidance system 118 may utilize the image data captured by the image sensors 104 to detect living organisms (e.g., fawns) and/or other obstacles and adjust or recommend adjustment of operation of the agricultural vehicle 102 and/or the implement 122 subsequent to detection of the living organism and/or other obstacles. As depicted in FIG. 1, each image sensor 104 may have a respective field of view 126. The field of view 126 may refer to an angular extend of an observable scene that a given image sensor 104 can capture.

Additionally, the guidance system 118 may include or may be in communication with a global navigation satellite system ("GNSS 124"). For instance, in some embodiments, the agricultural vehicle 102 may include a separate GNSS 124, and the GNSS 124 may be in operable communication with the guidance system 118. The GNSS 124 may operate in conventional manners and may provide GNSS data to the guidance system 118.

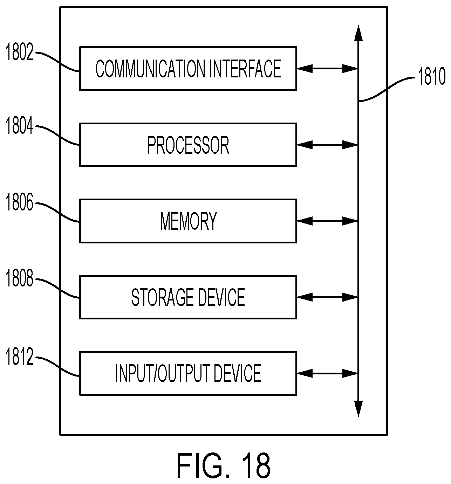

The input/output device 120 may allow an operator of the agricultural vehicle 102 to provide input to, receive output from, and otherwise transfer data to and receive data from guidance system 118 of the control system 128. The input/output device 120 may include a mouse, a keypad or a keyboard, a joystick, a touch screen, a camera, an optical scanner, network interface, modem, other known I/O devices or a combination of such I/O interfaces. The input/output device 120 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 120 is configured to provide graphical data to a display for presentation to an operator. The graphical data may be representative of one or more graphical user interfaces and/or any other graphical content as may serve a particular implementation. As is described in greater detail below, the control system 128 and the input/output device 120 may be utilized to display data (e.g., images and/or video data) received from the one or more imager guidance systems 118 and provide one or more recommendations of adjusting operation of the agricultural vehicle 102 and/or the implement 122 and/or video data to assist an operator in navigating the agricultural vehicle 102 and implement 122. The control system 128 is described in greater detail below in regard to FIG. 18.

Referring still to FIG. 1, while the guidance system 118 is described as being part of the control system 128 or the agricultural vehicle 102, the disclosure is not so limited. Rather, the guidance system 118 may be part of (e.g., operated on) another device in communication with the control system 128 of the agricultural vehicle 102. In further embodiments, the guidance system 118 may be part of one or more servers or remote devices in communication with the control system 128.

Additionally, while FIG. 1 shows the guidance system 118 as being part of and/or utilized in relation to operation of an agricultural vehicle 102, the disclosure is not so limited. Rather, the guidance system 118 may be part of and/or utilized in relation to operation of any agriculture vehicle (e.g., a combine) and/or implement 122.

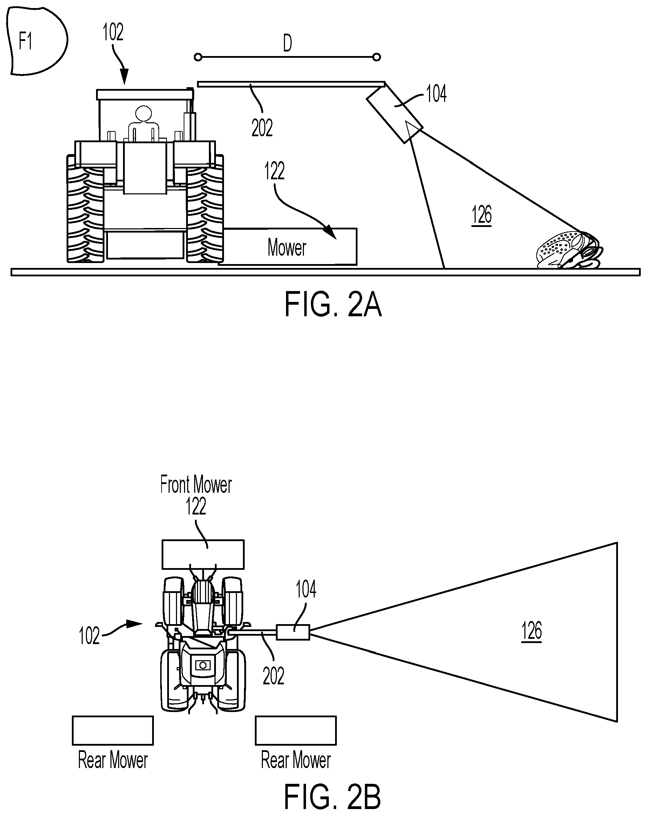

FIG. 2A is a rear schematic view of an agricultural vehicle 102 and an implement 122 (e.g., a mower) with an image sensor 104 coupled to the agricultural vehicle 102. FIG. 2B is a top schematic view of the agricultural vehicle 102, the implement 122, and the image sensor 104 of FIG. 2A.

Referring to FIG. 2A and FIG. 2B together, the image sensor 104 may be coupled to the agricultural vehicle 102 by way of an arm member 202. The arm member 202 may extend laterally outward from the agricultural vehicle 102 in a direction orthogonal to a direction of travel of the agricultural vehicle 102. Furthermore, the image sensor 104 may be coupled a longitudinal end of the arm member 202 opposite the agricultural vehicle 102. Additionally, the image sensor 104 may be coupled to the arm member 202 such that the field of view 126 includes an angled downward view of the environment (e.g., ground and vegetation) around the agricultural vehicle 102.

In some embodiments, the arm member 202 may be coupled to a top of a cabin of the agricultural vehicle 102. In additional embodiments, the arm member 202 may be mounted to any of a bottom surface, a top surface, a side surface, or a longitudinal end surface of the agricultural vehicle 102. In some embodiments, the arm member 302 may include one or more actuators that are operably coupled to the guidance system 118 of the control system 128. The one or more actuators may facilitate manipulation of a position of the arm member 202, and as a result, the field of view 126 of the image sensor 104. In some embodiments, the one or more actuators may be capable of rotating the arm member 202 about at least two axes (e.g., an X-axis and a Z-axis). The one or more actuators may include one or more mechanical/electromechanical actuators (e.g., linear actuators and/ rotary actuators). In some embodiments, the actuators may be operated and controlled by the guidance system 118.

In one or more embodiments, the arm member 202 may include a telescopic arm and may be configured to extend and retract relative to the agricultural vehicle 102. In some embodiments, the arm member 202 may be rotatably coupled to the frame agricultural vehicle 102 at a longitudinal end of the arm member 202. In some embodiments, the arm member 202 may be configured to pivot and rotate about at least one axis relative to the agricultural vehicle 102. In some embodiments, the arm member 202 may be both telescopic and rotatably coupled to the agricultural vehicle 102. In some embodiments, the one or more actuators may be operably coupled to the guidance system 118 of the control system 128 and, responsive to instructions, may cause the arm member 202 to extend, retract, and/or rotate in order to manipulate a position and orientation of the image sensor 104 relative to the agricultural vehicle 102. In some embodiments, the arm member 202 may be removably coupled to the agricultural vehicle 102.

In some embodiments, a distance (D) between the image sensor 104 and the agricultural vehicle 102 (i.e., a longitudinal length of the arm member 202 may be selected and known. For example, in some embodiments, the distance (D) between the image sensor 104 and the agricultural vehicle 102 may be within a range of about 1.5m and about 3.5m. For instance, the distance (D) may be about 2.5m. By knowing a distance between the image sensor 104 and the agricultural vehicle 102, where the arm member 202 is coupled to the agricultural vehicle 102, an orientation of the arm member 202 relative to the agricultural vehicle 102, and an orientation of the image sensor 104 relative to the arm member 202, an orientation of the field of view 126 of the image sensor 104 relative to the agricultural vehicle 102 and/or an associated implement 122 may be determined and/or known by the guidance system 118.

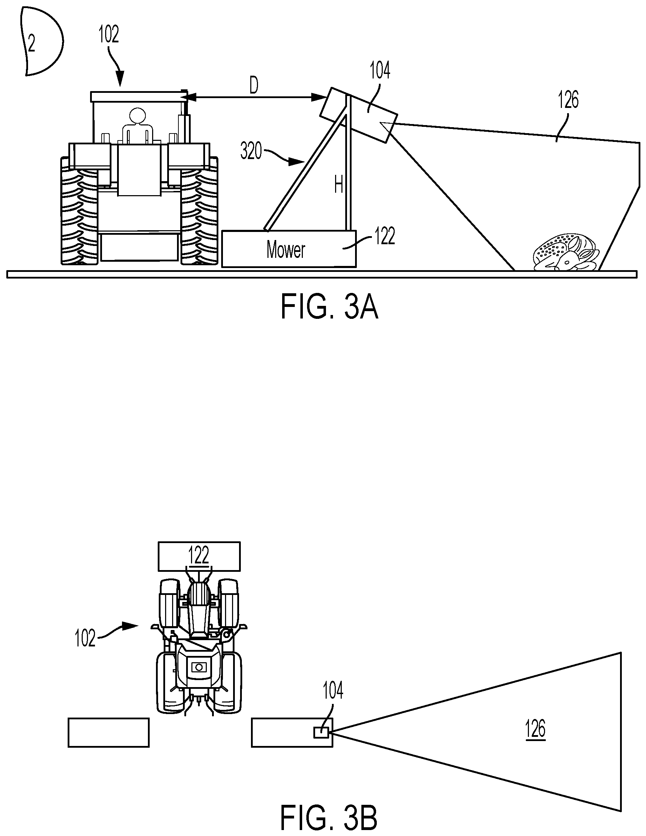

FIG. 3A is a rear schematic view of an agricultural vehicle 102 and an implement 122 (e.g., a mower) with an image sensor 104 coupled to the agricultural vehicle 102. FIG. 3B is a top schematic view of the agricultural vehicle 102, the implement 122, and the image sensor 104 of FIG. 3A.

Referring to FIG. 3A and FIG. 3B together, the image sensor 104 may be coupled to the implement 122 by way of a frame 320 mounted to the implement 122. The frame 320 may extend upward from the implement 122. Additionally, the image sensor 104 may be coupled to the frame 320 in manner and is oriented such that the field of view 126 includes an angled downward view of the environment (e.g., ground and vegetation) around the agricultural vehicle 102.

In some embodiments, the frame 320 may include one or more of the arm members 202 and/or actuators described above, and the arm members 202 and/or actuators may be utilized via any of the manners described herein to manipulate an orientation and a location of the image sensor 104 relative to the agricultural vehicle 102 and/or implement 122.

In some embodiments, the distance (D) between the image sensor 104 and the agricultural vehicle 102 (i.e., a longitudinal length of the arm member 202) may be selected and known via any of the manners described herein. Furthermore, a height (H) at which the image sensor 104 is mounted above the implement 122 via the frame 320 may be selected and known via any of the manners described herein in regard to the distance (D).

By knowing a distance between the image sensor 104 and the agricultural vehicle 102, where the frame 320 is mounted to the implement 122, where the image sensor 104 is mounted on the frame 320, the (H) at which the image sensor 104 is mounted above the implement 122, and an orientation of the image sensor 104 relative to the frame 320, an orientation of the field of view 126 of the image sensor 104 relative to the agricultural vehicle 102 and/or an associated implement 122 may be determined and/or known by the guidance system 118.

Referring to FIG. 3A and FIG. 3B together, the image sensor 104 may include a thermal camera. For example, the image sensor 104 may include a long-wave infrared (LWIR) camera. In additional embodiments, the image sensor 104 may include one or more of a mid-wave infrared (MWIR) camera, a short-wave infrared (SWIR) camera, an ultraviolet camera (UV camera), or a visible light camera with an infrared filter.

Furthermore, the image sensor 104 may be configured to capture data including one or more of relatively high resolution color images/video, relatively high resolution infrared images/video, or light detection and ranging data. In some embodiments, the image sensor 104 may be configured to capture image data at multiple focal lengths. In some embodiments, the image sensor 104 may be configured to combine multiple exposures into a single high-resolution image/video. In some embodiments, the image sensor 104 may include multiple image sensors (e.g., cameras) with fields of view 126 facing different directions. For instance, a first image sensor may generally face forward (e.g., in a direction of travel), and a second image sensor may generally face downward toward a soil surface in a direction orthongal to a direction of travel of the agricultural vehicle 102.

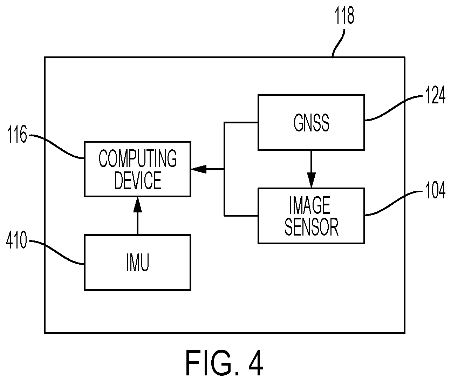

FIG. 4 is a schematic view of the guidance system 118 according to one or more embodiments of the disclosure. As noted above, the guidance system 118 may include the image sensor 104 and the GNSS 124. Additionally, in one or more embodiments, the guidance system 118 may include a computing device 116 and an inertial measurement unit 410 (IMU 410). The GNSS 124, the image sensor 104, and the inertial measurement unit 410 may be in operable communication with computing device 116 and may be configured to provide data to the computing device 116. In additional embodiments, the image sensor 104, the GNSS 124, and/or the inertial measurement unit 410 may be separate and distinct from the guidance system 118 and may be in operable communication with the guidance system 118.

As is described in greater detail below, the computing device 116 may include a communication interface, a processor, a memory, a storage device, an input/output device, and a bus. The computing device 116 is described in greater detail in regard to FIG. 18.

In some embodiments, the inertial measurement unit 410 may include a device that is configured to measure and output specific force, attitude, velocity, angular rate, and/or an orientation of a moving object (e.g., the agricultural vehicle 102) relative to a reference frame. The inertial measurement unit 410 may combine accelerometers (for linear acceleration) and gyroscopes (for rotational rate) to determine the object's motion. In one or more embodiments, the inertial measurement unit 410 may also include one or more magnetometers for heading reference. As noted above, the inertial measurement unit 410 may be operably coupled to the computing device 116 and may provide measured and/or calculated data to the computing device 116.

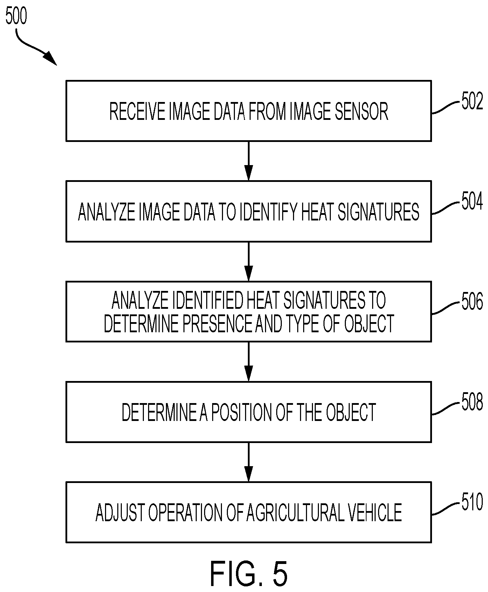

FIG. 5 shows a flowchart of a method 500 of controlling operation an agricultural vehicle (e.g., a tractor) and/or an implement 122 during an agricultural process (e.g., a mowing operation, a planting operation, a harvesting operation, etc.) according to one or more embodiments of the disclosure. In one or more embodiments, the guidance system 118 may perform one or more acts of the method 500. Additionally, in some embodiments, one or more acts of the method 500 may be performed by the control system 128 of the agricultural vehicle 102 and/or a remote device.

In some embodiments, the method 500 may include receiving image data from image sensor 104, as shown in act 502 of FIG. 5. For example, the computing device 116 of the guidance system 118 may receive the image data from the image sensor 104. In one or more embodiments, the image sensor 104 may include any of the image sensors described herein. For instance, the image sensor 104 may include a thermal camera. Additionally, the image data may include thermal image data. For example, the image data may include thermal image data that includes thermograms that represent variations in infrared emissions across an observed environment. Furthermore, each pixel of the thermal image data may correspond to a specific temperature value. In some embodiments, the thermal image data may include an applied color palette such that each color of the thermal image data represent a temperature range. For instance, cooler areas represented in the thermal image data may be represented by shades of blue, and hotter areas represented in the thermal image data may be represented by shades of red.

Responsive to receiving the image data, the method 500 may include analyzing the image data to identify heat signatures, as shown in act 504 of FIG. 5. For example, the computing device 116 of the guidance system 118 may analyze the image data to identify heat signatures depicted in the image data. For example, the image data may be analyzed to identify unique patterns of infrared radiation (i.e., heat signatures) emitted by objects and living organisms and depicted in the thermal image data. The heat signatures correspond to varying levels of heat energy.

The image data may be analyzed via deep learning techniques to detect the heat signatures within the image data. For example, the guidance system 118 (e.g., the computing device 116) may utilize one or more of convolutional neural networks (CNNs), single shot detectors (SSDs), region-convolutional neural networks (R-CNNs), Faster R-CNN, Region-based Fully Convolutional Networks (R-FCNs) and other machine learning models to perform the heat signature (e.g., object) detection and classification. The foregoing models may be trained according to conventional methods to perform the heat signature detection and classification. In some embodiments, the guidance system 118 may determine bounding boxes (e.g., a point, width, and height) of the detected one or more heat signatures. In additional embodiments, the guidance system 118 may perform object segmentation (e.g., object instance segmentation or sematic segmentation) to associate specific pixels of the image data with the detected one or more heat signatures.

The method 500 may further include analyzing the identified heat signatures to determine a presence and a type of an object, as shown in act 506 of FIG. 5. For example, the computing device 116 of the guidance system 118 may analyze the identified heat signatures to determine a presence and a type of an object depicted in the image data. In some embodiments, analyzing the identified heat signatures to determine a presence and a type of an object includes distinguishing living organisms from other heat-emitting objects. For example, distinguishing living organisms from other heat-emitting objects may include distinguishing the heat signature based on one or more of a size, a shape, or a heat pattern (e.g., the distribution of detected thermal energy (e.g., heat) across the heat signature) of the heat signatures Furthermore, in one or more embodiments, analyzing the identified heat signatures includes identifying types of living organisms depicted in the image data. For example, analyzing the identified heat signatures may include identifying fawns depicted in the image data.

The heat signatures of the image data may be analyzed via deep learning techniques to determine presences and types of objects depicted within the image data. For example, the guidance system 118 (e.g., the computing device 116) may utilize one or more of convolutional neural networks (CNNs), single shot detectors (SSDs), region-convolutional neural networks (R-CNNs), Faster R-CNN, Region-based Fully Convolutional Networks (R-FCNs) and other machine learning models to perform the heat signature (e.g., object) detection and classification. The foregoing models may be trained according to conventional methods to perform the heat signature detection and classification. In some embodiments, the guidance system 118 may determine bounding boxes (e.g., a point, width, and height) of the detected one or more heat signatures, and based on the bounding boxes, classify the heat signatures as a present object and a type of object. For instance, in some embodiments, sizes, shapes, and heat patterns of the heat signatures may be utilized to classify a type of object. In additional embodiments, the guidance system 118 may perform object segmentation (e.g., object instance segmentation or sematic segmentation) to associate specific pixels of the heat signatures of image data with the one or more detected objects.

In some embodiments, analyzing the image data and the heat signatures may be performed utilizing one or more other or additional algorithms or models, such as, a YOLO (You Only Look Once) algorithm, Falzenszwalb Segmentation, DeepLab, U-Net, or MobileNet.

Responsive to detecting one or more objects that are classified as a living organism (e.g., a fawn), the method 500 may include determining a position of the object, as shown in act 508 of FIG. 5. For example, the guidance system 118 (e.g., the computing device 116) may determine the position of a detected object. In some embodiments, the position may include coordinates. For example, the coordinates may include global coordinates (e.g., latitude and longitude). In additional embodiments, the coordinates may be localized coordinates (e.g., X and Y positions within a given field) and may be relative to a local or unique map.

In some embodiments, determining the position of the object may optionally include receiving position data (i.e., location data) from the GNSS 124, and determining the coordinates of the object may be based at least partially on the received position data. For example, the GNSS 124 includes a receiver that receives ranging codes and navigation data during the agricultural process and determines a global position of the receiver (e.g., the agricultural vehicle 102) at one or more points during the agricultural process and/or continuously during the agricultural process. In some embodiments, relatively high-precision location data from a Real-Time Kinematic Global Navigation Satellite System (RTK-GNSS) may be received. Accordingly, in one more embodiments, the guidance system 118 may utilize the position data received from the GNSS 124 (e.g., an RTK-GNSS) and a known field of view 126 of the image sensor 104, as described above in regard to FIG. 2A through FIG. 3B, to determine a position (e.g., coordinates) of the object.

In one or more embodiments, as are described below in regard to FIG. XX, position data from a GNSS 124 may not be utilized and a position of the object may only be determined relative to the agricultural vehicle and/or implement utilizing the image data and, optionally, navigational data from the inertial measurement unit 410 (described below).

In some embodiments, determining the position of the object may further include mapping the object on a map (e.g., a digital map) utilized by the guidance system. In one or more embodiments, determining the position of the object may include generating a geofence (e.g., a virtual boundary and/or perimeter) around the object. For instance, the guidance system 118 may generate a geofence within a digital map utilized to guide a path of travel of the agricultural vehicle (e.g., an agricultural vehicle 102). In some embodiments, a mapping software may be utilized to generate the geofence. The geofence may have a square, polygon, oval, circle, or irregular shape.

In one or more embodiments, determining the position of the object may optionally include receiving navigational data from the inertial measurement unit 410 and determining the position of the object based at least partially on the received navigational data. For example, the guidance system 118 (e.g., the computing device 116 of the guidance system 118) may receive the navigational data from the inertial measurement unit 410. In some embodiments, the navigational data may include one or more of specific force data, attitude data, velocity data, angular rate data, and/or an orientation data of the agricultural vehicle (e.g., the agricultural vehicle 102) and/or implement relative to a reference (e.g., ground surface). The inclusion of navigational data from the inertial measurement unit 410 may enhance the guidance system's accuracy and reliability by providing additional data on orientation, velocity, and gravitational forces, which may help in compensating for any GNSS signal degradation due to environmental factors.

Responsive the determining the position of the object, the type and position of the object may be logged (e.g., stored) with the memory of the guidance system 118.

Additionally, the method 500 may include, responsive to determining a position of the object, adjusting operation of the agricultural vehicle and/or the implement, as shown in act 510 of FIG. 5. For example, the guidance system 118 (e.g., the computing device 116 of the guidance system 118) may adjust operation or send signals to the control system 128 to adjust operation of the agricultural vehicle and/or the implement 122.

In some embodiments, adjustment to operation of the agricultural vehicle may not happen immediately. For example, the object may be detected in an area where a subsequent (e.g., later) pass of the agricultural vehicle will occur during the agricultural process. As a result, adjustment to the operation of the agricultural vehicle may occur when a path of travel (e.g., an intended and/or planned path of travel) will intersect with or cause the agricultural vehicle to come within a given distance of the detected object and/or geofence around the detected object. In some embodiments, the given distance may be about 1.0 m, 2.0m, 5m, 10m, 20m, or more. In some instance, the given distance may be determined based on a size (e.g., width) of the agricultural vehicle and/or implement 122. Furthermore, the agricultural vehicle, for the purposes of the present disclosure may be considered "proximate" to the detected object and/or geo fence when it approaches one of the above listed distances or any distance between.

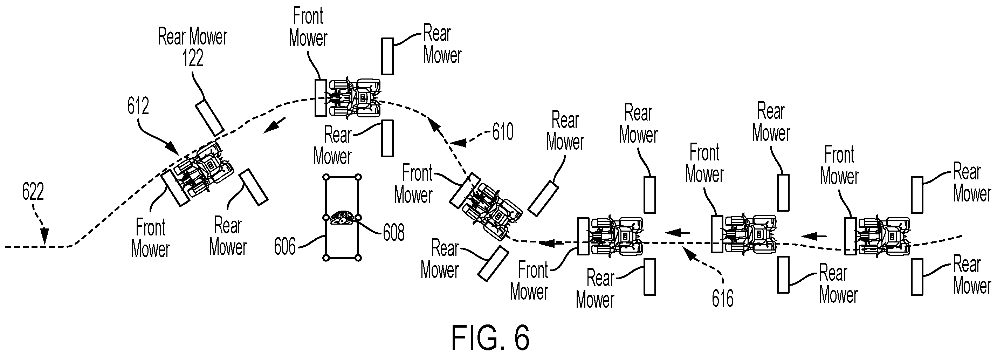

Adjusting operation of the agricultural vehicle is described in greater detail in regard to FIG. 6 through FIG. 10.

FIG. 6 shows an agricultural vehicle 612 with an implement 122 (in this example, a mower combination) coupled to the agricultural vehicle 612. The agricultural vehicle 612 is depicted at various positions along a path traveled. Furthermore, FIG. 6 shows a detected object 608, detected via any of manners described herein, and a geofence 606 defined around the detected object 608.

As shown in FIG. 6, in some embodiments, adjusting operation of the agricultural vehicle 612 may include, when the agricultural vehicle 612 is moving along an initial path of travel 616 that would either intersect with detected object 608 and/or geofence 606 or cause the agricultural vehicle 612 to come within a given distance of the detected object 608 and/or geofence 606, causing the agricultural vehicle 612 to divert and navigate around the detected object 608 and geofence 606 along a diverted path of travel 610 and ultimately return a subsequent path of travel 622 that is at least substantially collinear to an initial path of travel 616. As noted above, adjustment to operation of the agricultural vehicle 612 may occur during a pass within a given field that is subsequent to a pass during which the detected object 608 was detected and the geofence 606 was generated.

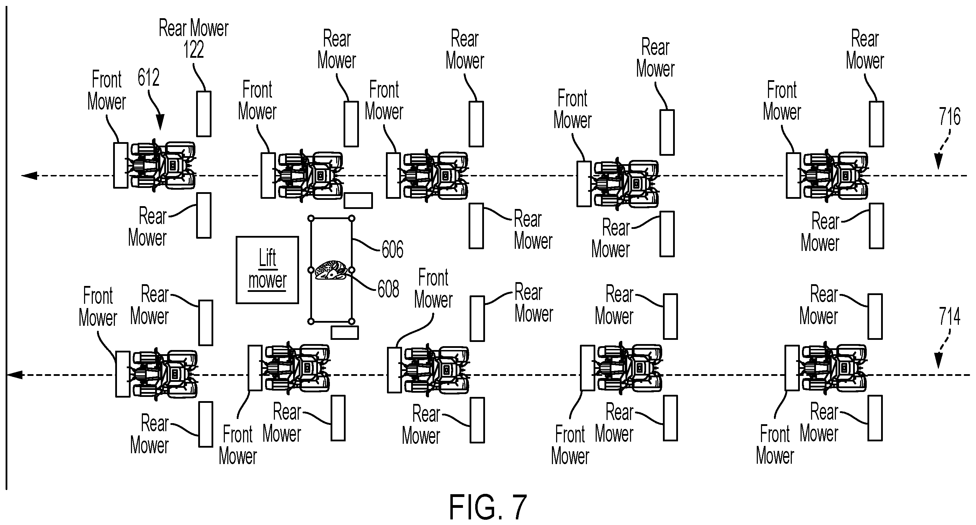

FIG. 7 shows an agricultural vehicle 612 with an implement 122 (in this example, a mower combination) coupled to the agricultural vehicle 612. The agricultural vehicle 612 is depicted at various positions along a first pass 714 traveled and a subsequent second pass 716 traveled. Furthermore, FIG. 7 shows a detected object 608, detected via any of manners described herein, and a geofence 606 defined around the detected object 608.

As shown in FIG. 7, in some embodiments, adjusting operation of the agricultural vehicle 612 may include, while traveling along a pass within a given field (e.g., a first pass 714) during which the detected object 608 was detected and the geofence 606 was generated, causing the implement 122 to change position and/or orientation to avoid the detected object 608, and during a subsequent pass within the given field (e.g., the second pass 716), also causing the implement 122 to change position and/or orientation the detected object 608. Furthermore, changing the position and/or the orientation of the implement 122 may include lifting the implement 122 and/or moving the implement 122 (e.g. a given mower unit) to a folded position relative to the agricultural vehicle 612(e.g., folding the implement 122).

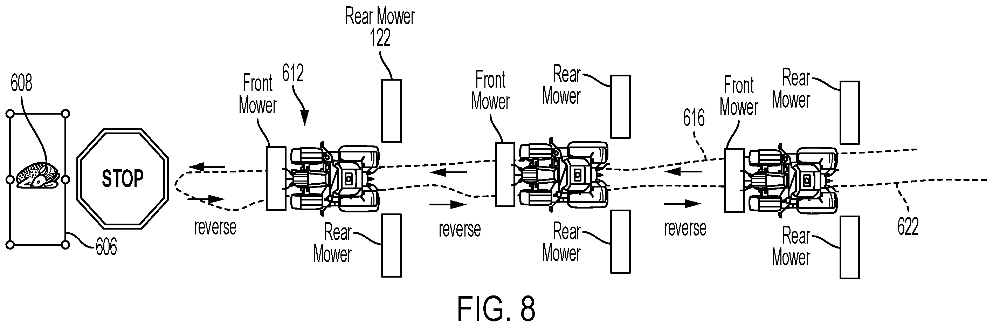

FIG. 8 shows an agricultural vehicle 612 with an implement 122 (in this example, a mower combination) coupled to the agricultural vehicle 612. The agricultural vehicle 612 is depicted at various positions along a path traveled. Furthermore, FIG. 8 shows a detected object 608, detected via any of manners described herein, and a geofence 606 defined around the detected object 608.

As shown in FIG. 8, in some embodiments, adjusting operation of the agricultural vehicle 612 may include, when the agricultural vehicle 612 is moving along an initial path of travel 616 that would either intersect with detected object 608 and/or geofence 606 or cause the agricultural vehicle 612 to come within a given distance of the detected object 608 and/or geofence 606, causing the agricultural vehicle 612 to stop and reverse travel for at least some distance along a subsequent path of travel 622 that is parallel to the initial path of travel 616 but in an opposite direction. As noted above, adjustment to operation of the agricultural vehicle 612 may occur during a pass within a given field that is subsequent to a pass during which the detected object 608 was detected and the geofence 606 was generated, or adjustment to operation of the agricultural vehicle 612 may occur during a pass within which the detected object 608 was detected and the geofence 606 was generated.

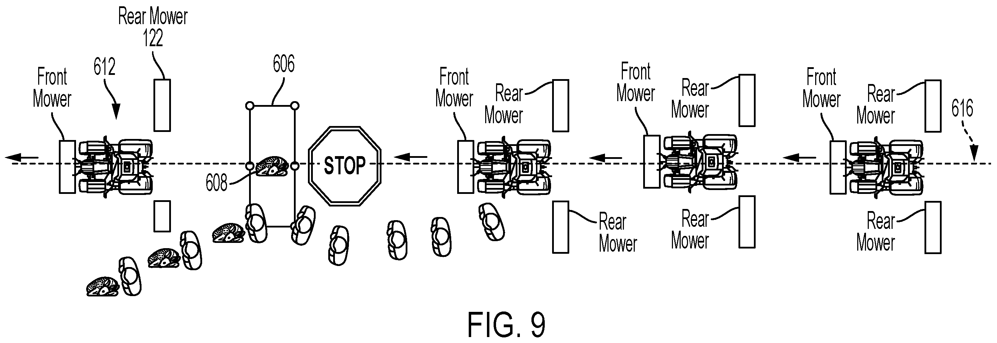

FIG. 9 shows an agricultural vehicle 612 with an implement 122 (in this example, a mower combination) coupled to the agricultural vehicle 612. The agricultural vehicle 612 is depicted at various positions along a path traveled. Furthermore, FIG. 9 shows a detected object 608, detected via any of manners described herein, and a geofence 606 defined around the detected object 608.

As shown in FIG. 9, in some embodiments, adjusting operation of the agricultural vehicle 612 may include, when the agricultural vehicle 612 is moving along an initial path of travel 616 that would either intersect with detected object 608 and/or geofence 606 or cause the agricultural vehicle 612 to come within a given distance of the detected object 608 and/or geofence 606, causing the agricultural vehicle 612 to stop prior to intersecting with the detected object 608 and/or geofence 606 or coming within a given distance of the detected object 608 and/or geofence 606 and prompting an operator (e.g., via a display of the guidance system 118 and/or the control system 128) to verify the presence of the detected object 608 and/or cause the detected object 608 to move. As noted above, adjustment to operation of the agricultural vehicle 612 may occur during a pass within a given field that is subsequent to a pass during which the detected object 608 was detected and the geofence 606 was generated, or adjustment to operation of the agricultural vehicle 612 may occur during a pass within which the detected object 608 was detected and the geofence 606 was generated.

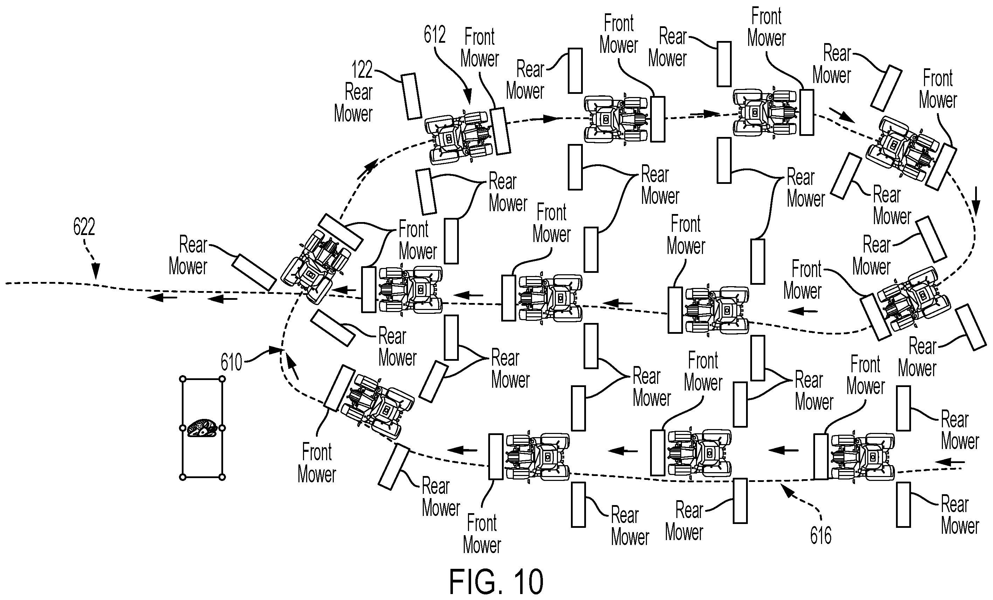

FIG. 10 shows an agricultural vehicle 612 with an implement 122 (in this example, a mower combination) coupled to the agricultural vehicle 612. The agricultural vehicle 612 is depicted at various positions along a path traveled. Furthermore, FIG. 10 shows a detected object 608, detected via any of manners described herein, and a geofence 606 defined around the detected object 608.

As shown in FIG. 10, in some embodiments, adjusting operation of the agricultural vehicle 612 may include, when the agricultural vehicle 612 is moving along an initial path of travel 616 that would either intersect with detected object 608 and/or geofence 606 or cause the agricultural vehicle 612 to come within a given distance of the detected object 608 and/or geofence 606, causing the agricultural vehicle 612 to divert and navigate along a diverted path of travel 610 and onto a subsequent path of travel 622 that is at least substantially parallel to and offset from an initial path of travel 616 and that avoids intersecting with and/or coming within a given distance of the detected object 608 and/or geofence 606. As noted above, adjustment to operation of the agricultural vehicle 612 may occur during a pass within a given field that is subsequent to a pass during which the detected object 608 was detected and the geofence 606 was generated, or adjustment to operation of the agricultural vehicle 612 may occur during a pass within which the detected object 608 was detected and the geofence 606 was generated.

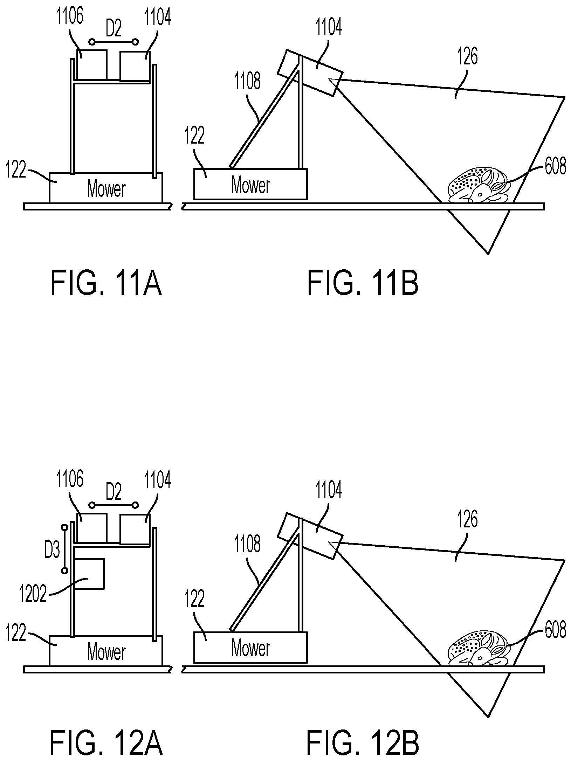

FIG. 11A is a side schematic view of an implement 122 (e.g., a mower) with a first image sensor 1104 and a second image sensor 1106 coupled to the implement 122. FIG. 11B is a rear schematic view of the implement 122, the first image sensor 1104, and the second image sensor 1106 of FIG. 11A.

Referring to FIG. 11A and FIG. 11B together, the first image sensor 1104 and the second image sensor 1106 may be coupled to the implement 122 by way of a frame 1108 mounted to the implement 122. The frame 1108 may extend upward from the implement 122. Additionally, the first image sensor 1104 and the second image sensor 1106 may be coupled to the frame 320 in manner and is oriented such that the fields of view 126 of the first image sensor 1104 and the second image sensor 1106 include angled downward views of the environment (e.g., ground and/or vegetation) around the agricultural vehicle 102 (FIG. 1). In some embodiments, the first image sensor 1104 and the second image sensor 1106 may be mounted to the frame 1108 at substantially a same elevation. In some embodiments, the frame 1108 may include one or more of the arm members 202 and/or actuators described above, and the arm members 202 and/or actuators may be utilized via any of the manners described herein to manipulate an orientation and location of the first image sensor 1104 and the second image sensor 1106 relative to the agricultural vehicle 102 (FIG. 1) and/or implement 122.

As noted above, a horizontal distance (D) (FIG. 3A) between each of the first image sensor 1104 and the second image sensor 1106 and the agricultural vehicle 102 (FIG. 1) and/or the implement 122 may be selected and known via any of the manners described herein. Furthermore, elevations (H) (FIG. 3A) at which the first image sensor 1104 and the second image sensor 1106 are mounted above the implement 122 via the frame 1108 may be selected and known via any of the manners described herein in regard to the distance (D). Likewise, a horizontal distance (D2) between the first image sensor 1104 and the second image sensor 1106 may be selected and known. As result, the orientation of the field of view 126 of the first image sensor 1104 relative to the field of view of the second image sensor 1106 may be selected and known. Additionally, the orientation of the field of view 126 of the first image sensor 1104 and the orientation of the field of view of the second image sensor 1106 relative to the agricultural vehicle 102 (FIG. 1) and/or the implement 122 may be selected and known.

The first image sensor 1104 may include a thermal camera. For example, the first image sensor 1104 may include a long-wave infrared (LWIR) camera. In additional embodiments, the first image sensor 1104 may include one or more of a mid-wave infrared (MWIR) camera, a short-wave infrared (SWIR) camera, an ultraviolet camera (UV camera), or a visible light camera with an infrared filter.

In some embodiments, the second image sensor 1106 may include an additional thermal camera. For example, the second image sensor 1106 may include a long-wave infrared (LWIR) camera. In additional embodiments, the second image sensor 1106 may include one or more of a mid-wave infrared (MWIR) camera, a short-wave infrared (SWIR) camera, an ultraviolet camera (UV camera), or a visible light camera with an infrared filter.

In additional embodiments, the second image sensor 1106 includes one of a light detection and ranging (LiDAR) camera, a near infrared camera (NIR), a short-wave infrared (SWIR) camera, an RGB camera, or a polarized camera.

FIG. 12A is a side schematic view of an implement 122 (e.g., a mower) with a first image sensor 1104, a second image sensor 1106, and third image sensor 1202 coupled to the implement 122. FIG. 12B is a rear schematic view of the implement 122, the first image sensor 1104, and the second image sensor 1106 of FIG. 12A.

Referring to FIG. 12A and FIG. 12B together, the first image sensor 1104, the second image sensor 1106, and the third image sensor 1202 may be coupled to the implement 122 by way of a frame 1108 mounted to the implement 122. The frame 1108 may extend upward from the implement 122. Additionally, the first image sensor 1104, the second image sensor 1106, and the third image sensor 1202 may be coupled to the frame 320 in manner and is oriented such that the fields of view 126 of the first image sensor 1104, the second image sensor 1106, and the third image sensor 1202 include angled downward views of the environment (e.g., ground and/or vegetation) around the agricultural vehicle 102 (FIG. 1). In some embodiments, the first image sensor 1104 and the second image sensor 1106 may be mounted to the frame 1108 at substantially a same elevation. Additionally, the third image sensor 1202 may be mounted to the frame 1108 at an elevation below or above the first image sensor 1104 and the second image sensor 1106. In some embodiments, the frame 1108 may include one or more of the arm members 202 and/or actuators described above, and the arm members 202 and/or actuators may be utilized via any of the manners described herein to manipulate an orientation and location of the first image sensor 1104, the second image sensor 1106, and the third image sensor 1202 relative to the agricultural vehicle 102 (FIG. 1) and/or implement 122.

As noted above, a horizontal distance (D) (FIG. 3A) between each of the first image sensor 1104, the second image sensor 1106, and the third image sensor 1202 and the agricultural vehicle 102 (FIG. 1) and/or the implement 122 may be selected and known via any of the manners described herein. Furthermore, elevations (H) (FIG. 3A) at which the first image sensor 1104, the second image sensor 1106, and the third image sensor 1202 are mounted above the implement 122 via the frame 1108 may be selected and known via any of the manners described herein in regard to the distance (D). Likewise, as noted above, a horizontal distance (D2) between the first image sensor 1104 and the second image sensor 1106 may be selected and known. As result, the orientation of the field of view 126 of the first image sensor 1104 relative to the field of view of the second image sensor 1106 may be selected and known. Additionally, the orientation of the field of view 126 of the first image sensor 1104 and the orientation of the field of view of the second image sensor 1106 relative to the agricultural vehicle 102 (FIG. 1) and/or the implement 122 may be selected and known. Moreover, a vertical distance (D3) between the elevation of the third image sensor 1202 and the elevation of the first image sensor 1104 and the second image sensor 1106 may be selected and known. As result, the orientation of the field of view 126 of the third image sensor 1202 relative to the fields of view of the first image sensor 1104 and the second image sensor 1106 may be selected and known. Additionally, the orientation of the field of view 126 of the first image sensor 1104 and the orientation of the field of view 126 of the third image sensor 1202 relative to the agricultural vehicle 102 (FIG. 1) and/or the implement 122 may be selected and known.

As noted above, the first image sensor 1104 may include a thermal camera. For example, the first image sensor 1104 may include a long-wave infrared (LWIR) camera. In additional embodiments, the first image sensor 1104 may include one or more of a mid-wave infrared (MWIR) camera, a short-wave infrared (SWIR) camera, an ultraviolet camera (UV camera), or a visible light camera with an infrared filter.

Additionally, as noted above, the second image sensor 1106 may include an additional thermal camera. For example, the second image sensor 1106 may include a long-wave infrared (LWIR) camera. In additional embodiments, the second image sensor 1106 may include one or more of a mid-wave infrared (MWIR) camera, a short-wave infrared (SWIR) camera, an ultraviolet camera (UV camera), or a visible light camera with an infrared filter.

Furthermore, the third image sensor may include one of a light detection and ranging (LiDAR) camera, a near infrared camera (NIR), a short-wave infrared (SWIR) camera, an RGB camera, or a polarized camera.

As is discussed in greater detail below, image data from the third image sensor 1202 may be utilized in conjunction with the image data from the first image sensor 1104 and the second image sensor 1106 to generate three-dimensional information about a shape and a distance of objects surrounding the agricultural vehicle 102 (FIG. 1) and/or the implement 122. In particular, utilizing the image data from the first image sensor 1104, the second image sensor 1106, and the third image sensor 1202, the guidance system 118 (FIG. 1) to generate one or more environmental models of an environment around the agricultural vehicle 102 (FIG. 1) and/or the implement 122 during an agricultural process.

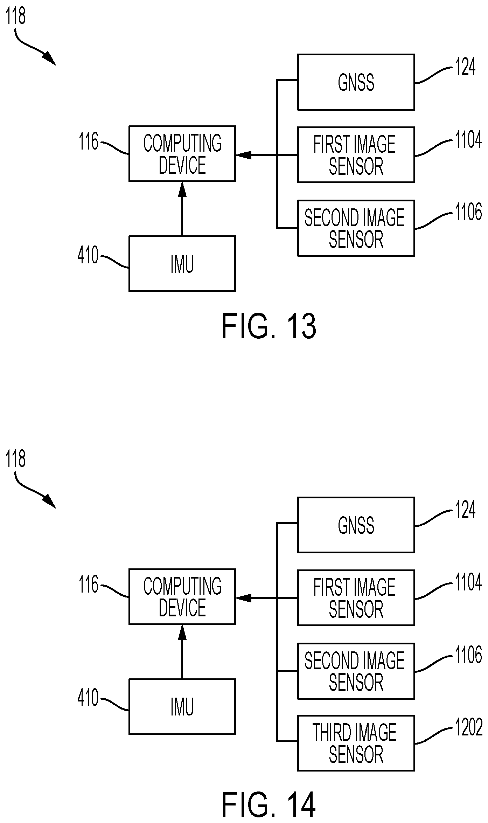

FIG. 13 is a schematic view of the guidance system 118 according to one or more embodiments of the disclosure. The guidance system 118 may include the computing device 116, the first image sensor 1104, the second image sensor 1106, the inertial measurement unit 410, and the GNSS 124. The GNSS 124, the first image sensor 1104, the second image sensor 1106, the inertial measurement unit 410, and the GNSS 124 may be in operable communication with computing device 116 and may be configured to provide data to the computing device 116. In additional embodiments, the first image sensor 1104, the second image sensor 1106, the inertial measurement unit 410, and the GNSS 124 may be separate and distinct from the guidance system 118 and may be in operable communication with the guidance system 118. For instance, one or more of the first image sensor 1104, the second image sensor 1106, the inertial measurement unit 410, and the GNSS 124 may be remote to the computing device 116.

FIG. 14 is a schematic view of the guidance system 118 according to one or more embodiments of the disclosure. The guidance system 118 may include the computing device 116, the first image sensor 1104, the second image sensor 1106, the third image sensor 1202, the inertial measurement unit 410, and the GNSS 124. The GNSS 124, the first image sensor 1104, the second image sensor 1106, the third image sensor 1202, the inertial measurement unit 410, and the GNSS 124 may be in operable communication with computing device 116 and may be configured to provide data to the computing device 116. In additional embodiments, the first image sensor 1104, the second image sensor 1106, the third image sensor 1202, the inertial measurement unit 410, and the GNSS 124 may be separate and distinct from the guidance system 118 and may be in operable communication with the guidance system 118. For instance, one or more of the first image sensor 1104, the second image sensor 1106, the third image sensor 1202, the inertial measurement unit 410, and the GNSS 124 may be remote to the computing device 116.

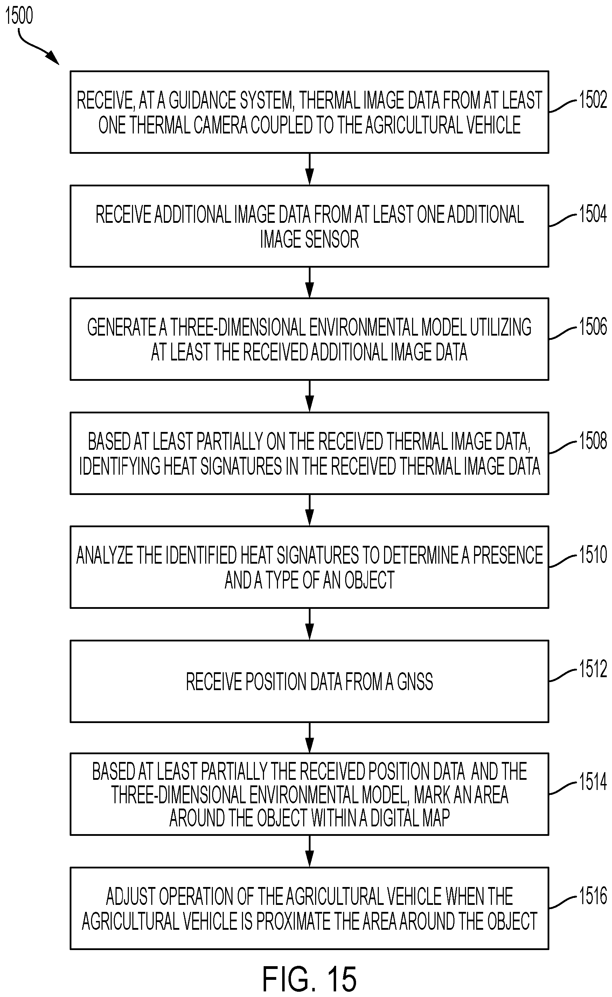

FIG. 15 shows a flowchart of a method 1500 of controlling operation an agricultural vehicle 102 (e.g., a tractor) and/or an implement 122 during an agricultural process (e.g., a mowing operation, a planting operation, a harvesting operation, etc.) according to one or more embodiments of the disclosure. In one or more embodiments, the guidance system 118 may perform one or more acts of the method 1500. Additionally, in some embodiments, one or more acts of the method 1500 may be performed by the control system 128 of the agricultural vehicle 102 and/or a remote device.

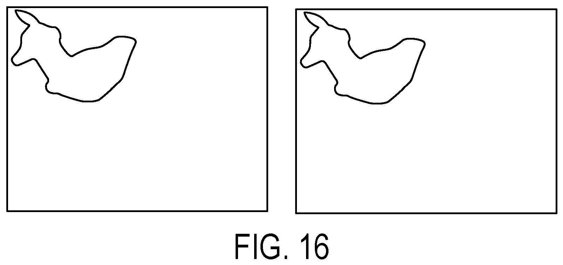

In some embodiments, the method 1500 may include receiving thermal image data from at least one image sensor, as shown in act 1502 of FIG. 15. For example, the computing device 116 of the guidance system 118 may receive the thermal image data from one or more of the first image sensor 1104 and the second image sensor 1106. In one or more embodiments, each of the first image sensor 1104 and the second image sensor 1106 may include any of the thermal image sensors described herein. For instance, each of the first image sensor 1104 and the second image sensor 1106 may include a LWIR camera. The thermal image data may include any of the thermal image data described above. FIG. 16 depicts examples images captured by a first image sensor 1104 and a second image sensor 1106.

Additionally, the method 1500 may include receiving additional image data from at least one additional image sensor, as show in act 1504 of FIG. 15. For instance, the computing device 116 of the guidance system 118 may receive the additional image data from the third image sensor 1202. The additional image data may include three-dimensional image data. For instance, the third image sensor 1202 may include a LiDAR camera, and the three-dimensional image data (e.g., three-dimensional information about the environment around the agricultural vehicle 102 and/or the implement.

The method 1500 may also include generating a three-dimensional environmental model utilizing at least the received additional image data, as shown in act 1506 of FIG. 15. For example, the computing device 116 of the guidance system 118 may generate the three-dimensional (3D) environmental model. In some embodiments, generating the three-dimensional environmental model may include generating a virtual map of an environment perceived by the third image sensor 1202 via one or more know methods of generating 3D models using LiDAR data.

Based at least partially on the received thermal data, the method 500 may include analyzing the thermal image data to identify heat signatures, as shown in act 1508 of FIG. 15. For example, the computing device 116 of the guidance system 118 may analyze the thermal image data to identify heat signatures depicted in the image data via any of the manners described above.

The method 1500 may further include analyzing the identified heat signatures to determine a presence and a type of an object, as shown in act 1510 of FIG. 15. For example, the computing device 116 of the guidance system 118 may analyze the identified heat signatures to determine a presence and a type of an object depicted in the image data via any of the manners described above.

Additionally, the method 1500 may include receiving position data from the GNSS 124 as shown in act 1512 of FIG. 15. For example, the computing device 116 of the guidance system 118 may receive position data from the GNSS 124 via any of the manners described above, and the position data may include any of the position data described above.

Based at least partially on the received position data and the generated three-dimensional environmental model, the method 1500 may include marking the object within a digital map, as shown in act 1514 of FIG. 15. For instance, the computing device 116 of the guidance system 118 may mark a location of the object within the digital map based at least partially on the received position data and the generated three-dimensional environmental model. In some embodiments, marking the location of object within the digital map may include marking an area around the object.

In some embodiments, determining the position of the object may further include mapping the object on a map (e.g., a digital map) utilized by the guidance system. In one or more embodiments, determining the position of the object may include generating a geofence (e.g., a virtual boundary and/or perimeter) around the object. For instance, the guidance system 118 may generate a geofence within a digital map utilized to guide a path of travel of the agricultural vehicle (e.g., an agricultural vehicle 102). In some embodiments, a mapping software may be utilized to generate the geofence. The geofence may have a square, polygon, oval, circle, or irregular shape.

In one or more embodiments, determining the position of the object may optionally include receiving navigational data from the inertial measurement unit 410 and determining the position of the object based at least partially on the received navigational data. For example, the guidance system 118 (e.g., the computing device 116 of the guidance system 118) may receive the navigational data from the inertial measurement unit 410. In some embodiments, the navigational data may include one or more of specific force data, attitude data, velocity data, angular rate data, and/or an orientation data of the agricultural vehicle (e.g., the agricultural vehicle 102) and/or implement relative to a reference (e.g., ground surface). The inclusion of navigational data from the inertial measurement unit 410 may enhance the guidance system's accuracy and reliability by providing additional data on orientation, velocity, and gravitational forces, which may help in compensating for any GNSS signal degradation due to environmental factors.

Responsive the determining the position of the object, the type and position of the object may be logged (e.g., stored) with the memory of the guidance system 118.

Additionally, the method 1500 may include, responsive to determining a position of the object, adjusting operation of the agricultural vehicle and/or the implement, as shown in act 1516 of FIG. 155. For example, the guidance system 118 (e.g., the computing device 116 of the guidance system 118) may adjust operation or send signals to the control system 128 to adjust operation of the agricultural vehicle and/or the implement 122 according to any of the manners described above in regard to FIG. 6 through FIG. 10.

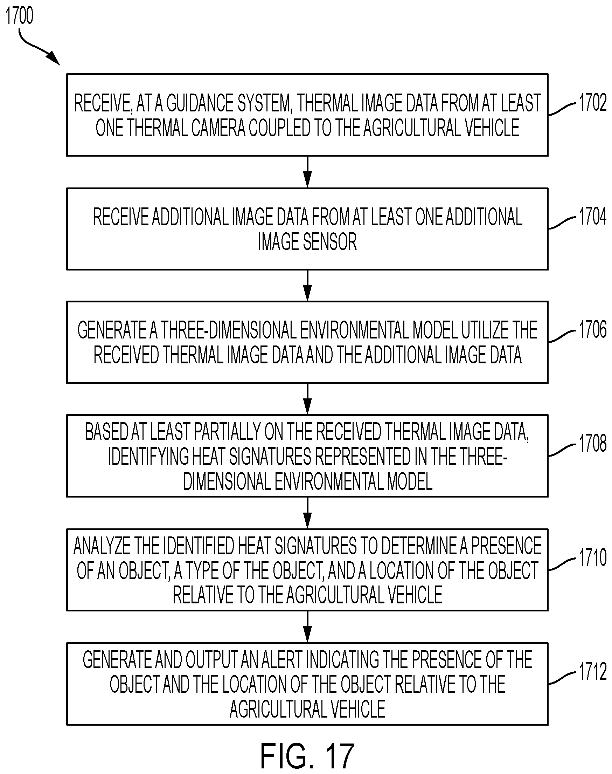

FIG. 17 shows a flowchart of a method 1700 of controlling operation an agricultural vehicle 102 (e.g., a tractor) and/or an implement 122 during an agricultural process (e.g., a mowing operation, a planting operation, a harvesting operation, etc.) according to one or more embodiments of the disclosure. In one or more embodiments, the guidance system 118 may perform one or more acts of the method 1700. Additionally, in some embodiments, one or more acts of the method 170000 may be performed by the control system 128 of the agricultural vehicle 102 and/or a remote device.

The method 1700 may include receiving thermal image data from at least one thermal camera coupled to the agricultural vehicle 102, as shown in act 1702 of FIG. 17. For example, the computing device 116 of the guidance system 118 may receive the thermal image data from one or more of the first image sensor 1104 and the second image sensor 1106. In one or more embodiments, each of the first image sensor 1104 and the second image sensor 1106 may include any of the thermal image sensors described herein. For instance, each of the first image sensor 1104 and the second image sensor 1106 may include a LWIR camera. The thermal image data may include any of the thermal image data described above.

The method 1700 may also include receiving additional image data from at least one additional image sensor, as shown in act 1704 of FIG. 17. For instance, the computing device 116 of the guidance system 118 may receive the additional image data from the third image sensor 1202. The additional image data may include three-dimensional image data. For instance, the third image sensor 1202 may include a LiDAR camera, and the three-dimensional image data (e.g., three-dimensional information about the environment around the agricultural vehicle 102 and/or the implement.

The method 1700 may also include generating a three-dimensional environmental model based at least the received additional image data and the received thermal image data, as shown in act 1706 of FIG. 17. For example, the computing device 116 of the guidance system 118 may generate the three-dimensional (3D) environmental model. In some embodiments, generating the three-dimensional environmental model may include generating a virtual map of an environment perceived by the third image sensor 1202 via one or more know methods of generating 3D models using LiDAR data.

Based at least partially on the received thermal data, the method 1700 may include analyzing the thermal image data to identify heat signatures, as shown in act 1708 of FIG. 17. For example, the computing device 116 of the guidance system 118 may analyze the thermal image data to identify heat signatures depicted in the image data via any of the manners described above.

The method 1700 may further include analyzing the identified heat signatures to determine a presence of an object, a type of an object, and a location of the object relative to the agricultural vehicle, as shown in act 1710 of FIG. 17. For example, the computing device 116 of the guidance system 118 may analyze the identified heat signatures to determine a presence of an object, a type of an object, and a location of the object relative to the agricultural vehicle. However, method 1700 may not utilize a GNSS, a GPS, or position data related to a GNSS or a GPS. Rather, the location of the object may only be determined relative to the agricultural vehicle and/or within a given field within which the agricultural vehicle 102 is performing the agricultural process.

Additionally, the method 1700 may include generating and outputting an alert indicating the presence of the object and the location of the object relative to the agricultural vehicle 102, as shown in act 1712 of FIG. 17. For example, the computing device 116 of the guidance system 118 may generate and output an alert indicating the presence of the object and the location of the object relative to the agricultural vehicle 102.

In some embodiments, the alert may include an audible alert. In additional embodiments, the alert may include a visual alert. For instance, outputting the alert may displaying an indication of the presence of the object on a display (e.g., the input/output device 120). The indication may include information regarding the type of the object and a location of the object relative to the agricultural vehicle 102. In some embodiments, the alert may include a visual representation of the detected object on a display.

In some embodiments, the method 1700 may optionally include outputting a recommendation to adjust operation of the agricultural vehicle 102 responsive to the presence of the object. The recommendation may include a recommendation to modify a path of travel of the agricultural vehicle to avoid the object. The recommendation may include a recommendation to stop movement of the agricultural vehicle and reverse the agricultural vehicle for at least some distance. The recommendation may include a recommendation to change an orientation of an implement coupled to the agricultural vehicle. The visual representation may include a depiction of the three-dimensional environmental model with the location of the object marked on the three-dimensional environmental model. The visual representation may include the received thermal image data.

FIG. 18 is a schematic view of the control system 128 and/or the computing device 116 of the guidance system 118, which may operate the guidance system 118 according to some embodiments of the disclosure. The control system 128 may include a communication interface 1802, a processor 1804, a memory 1806, a storage device 1808, and a bus 1810 in addition to the input/output device 1812.

In some embodiments, the processor 1804 includes hardware for executing instructions, such as those making up a computer program. As an example, and not by way of limitation, to execute instructions, the processor 1804 may retrieve (or fetch) the instructions from an internal register, an internal cache, the memory 1806, or the storage device 1808 and decode and execute them. In some embodiments, the processor 1804 may include one or more internal caches for data, instructions, or addresses. As an example, and not by way of limitation, the processor 1804 may include one or more instruction caches, one or more data caches, and one or more translation look aside buffers (TLBs). Instructions in the instruction caches may be copies of instructions in the memory 1806 or the storage device 1808.

The memory 1806 may be coupled to the processor 1804. The memory 1806 may be used for storing data, metadata, and programs for execution by the processor(s). The memory 1806 may include one or more of volatile and non-volatile memories, such as Random-Access Memory ("RAM"), Read-Only Memory ("ROM"), a solid state disk ("SSD"), Flash, Phase Change Memory ("PCM"), or other types of data storage. The memory 1806 may be internal or distributed memory.

The storage device 1808 may include storage for storing data or instructions. As an example, and not by way of limitation, storage device 1808 can comprise a non-transitory storage medium described above. The storage device 1808 may include a hard disk drive (HDD), a floppy disk drive, Flash memory, an optical disc, a magneto-optical disc, magnetic tape, or a Universal Serial Bus (USB) drive or a combination of two or more of these. The storage device 1808 may include removable or non-removable (or fixed) media, where appropriate. The storage device 1808 may be internal or external to the computing storage device 1808. In one or more embodiments, the storage device 1808 is non-volatile, solid-state memory. In other embodiments, the storage device 1808 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The communication interface 1802 can include hardware, software, or both. The communication interface 1802 may provide one or more interfaces for communication (such as, for example, packet-based communication) between the guidance system 118 and one or more other computing devices or networks (e.g., a server, etc.). As an example, and not by way of limitation, the communication interface 1802 may include a network interface controller (NIC) or network adapter for communicating with an Ethernet or other wire-based network or a wireless NIC (WNIC) or wireless adapter for communicating with a wireless network, such as a WI-FI.

In some embodiments, the bus 1810 (e.g., a Controller Area Network (CAN) bus) may include hardware, software, or both that couples components of guidance system 118 to each other and to external components.

The input/output device 1812 may allow an operator of the agricultural vehicle 102 to provide input to, receive output from, and otherwise transfer data to and receive data from guidance system 118 of the control system 128. The input/output device 1812 may include a mouse, a keypad or a keyboard, a joystick, a touch screen, a camera, an optical scanner, network interface, modem, other known I/O devices or a combination of such I/O interfaces. The input/output device 1812 may include one or more devices for presenting output to an operator, including, but not limited to, a graphics engine, a display (e.g., a display screen), one or more output drivers (e.g., display drivers), one or more audio speakers, and one or more audio drivers. In certain embodiments, the input/output device 1812 is configured to provide graphical data to a display for presentation to an operator. The graphical data may be representative of one or more graphical user interfaces and/or any other graphical content as may serve a particular implementation. The input/output device 1812 may be utilized to display data (e.g., images and/or video data) received from the one or more image sensors and provide one or more recommendations of adjusting operation of the agricultural vehicle 102 and/or the implement 122 and/or video data to assist an operator in navigating the agricultural vehicle 102 and implement 122.

All references cited herein are incorporated herein in their entireties. If there is a conflict between definitions herein and in an incorporated reference, the definition herein shall control.

The embodiments of the disclosure described above and illustrated in the accompanying drawings do not limit the scope of the disclosure, which is encompassed by the scope of the appended claims and their legal equivalents. Any equivalent embodiments are within the scope of this disclosure. Indeed, various modifications of the disclosure, in addition to those shown and described herein, such as alternate useful combinations of the elements described, will become apparent to those skilled in the art from the description. Such modifications and embodiments also fall within the scope of the appended claims and equivalents.

## Claims

1. A guidance system for controlling operation of an agricultural vehicle, comprising:
at least one processor; and
at least one non-transitory computer-readable storage medium storing instructions thereon that, when executed by the at least one processor, cause the guidance system, during an agricultural process, to:
receive image data from an image sensor;
analyze the received image data to identify heat signatures represented in the received image data;
analyze the identified heat signatures to determine a presence and a type of an object;
determine a location of the object; and
based at least partially on the determined location of the object, adjust operation of the agricultural vehicle.

2. The guidance system of claim 1, wherein the image sensor comprises a thermal camera.

3. The guidance system of claim 1, analyzing the identified heat signatures comprises utilizing one or more machine learning models to determine a presence and a type of an object.

4. The guidance system of claim 1, further comprising instructions that, when executed by the at least one processor, cause the guidance system to generate a geofence around the object.

5. The guidance system of claim 4, wherein the geofence is generated based at least partially on received Global Navigation Satellite System (GNSS) data, a determined orientation of the agricultural vehicle, and a known field of view of the camera relative to the agricultural vehicle.

6. The guidance system of claim 1, wherein the object comprises a living organism.

7. The guidance system of claim 1, wherein analyzing the received image data to identify heat signatures represented in the received image data comprises distinguishing living organisms from other warm objects based on at least one of a size, a shape, or a heat pattern of the heat signatures.

8. The guidance system of claim 7, wherein distinguishing living organisms from other warm objects based on at least one of a size, a shape, or a heat pattern of the heat signatures comprises utilizing a trained neural network to distinguish the heat signatures.

9. The guidance system of claim 1, wherein determining the location of the object comprises:
receiving position data from a real-time kinematic GNSS receiver of the guidance system during the agricultural process;
based at least partially on the received position data, determining a location of the agricultural vehicle at a time when the object was detected; and
based at least partially on the determined location of the agricultural vehicle, determining the location of the object.

10. The guidance system of claim 9, wherein determining the location of the object further comprises:
receiving navigation data from an inertial measurement unit (IMU) of the agricultural vehicle; and
determining the location of the object based at least partially on the received navigation data.

11. The guidance system of claim 1, wherein adjusting operation of the agricultural vehicle comprises modifying a path of travel of the agricultural vehicle to avoid the object.

12. The guidance system of claim 11, wherein modifying a path of travel of the agricultural vehicle comprises causing the agricultural vehicle to stop moving prior to intersecting the coordinates of the object and reverse for at least some distance.

13. The guidance system of claim 11, wherein modifying a path of travel of the agricultural vehicle comprises generating a new intended path of travel for the agricultural vehicle that navigates around the object.

14. The guidance system of claim 11, wherein modifying a path of travel of the agricultural vehicle comprises:
causing the agricultural vehicle to stop moving prior to intersecting the location of the object; and
requesting user input prior to resuming movement of the agricultural vehicle.

15. The guidance system of claim 11, wherein modifying a path of travel of the agricultural vehicle comprises generating a new intended wayline for at least a region of a field that avoids intersection with the location of the object.

16. The guidance system of claim 1, wherein adjusting operation of the agricultural vehicle comprises changing an orientation of an implement coupled to the agricultural vehicle.

17. The guidance system of claim 16, wherein changing an orientation of an implement coupled to the agricultural vehicle comprises changing orientation of at least one mowing unit coupled to the agricultural vehicle.

18. A method of guiding operation of an agricultural vehicle during an agricultural process, the method comprising:
receiving, at a guidance system, image data from an image sensor coupled to the agricultural vehicle;
analyzing the received image data to identify heat signatures represented in the received image data;
analyzing the identified heat signatures to determine a presence and a type of an object;
receiving position data from a GNSS receiver of the guidance system;
based at least partially the received position data, a known field of view of the image sensor, and a known orientation of the agricultural vehicle, determining a location of the object; and
based at least partially on the determined location of the object, adjusting operation of the agricultural vehicle.

19. The method of claim 18, wherein receiving image data from the image sensor comprises receiving thermal image data from a thermal camera.

20. An agricultural vehicle, comprising: a guidance system for controlling operation of the agricultural vehicle and comprising:
at least one processor; and
at least one non-transitory computer-readable storage medium storing instructions thereon that, when executed by the at least one processor, cause the guidance system, during an agricultural process, to:
receive thermal image data from a thermal camera;
analyze the received thermal image data to identify heat signatures represented in the thermal image data;
analyze the identified heat signatures to determine a presence and a type of a living organism;
generate a geofence around the living organism; and
based at least partially on the generated geofence, adjust operation of the agricultural vehicle.
